# EUROPÄISCHE PATENTSCHRIFT

(11) **EP 2 450 228 B1**
(45) Veröffentlichungstag und Bekanntmachung des Hinweises auf die Patenterteilung: **15.03.2017**
(21) Anmeldenummer: 11187606.6
(22) Anmeldetag: 03.11.2011
(51) Int. Cl.: B60N 2/44

(54) **Fahrzeugsitz**
Vehicle seat
Siège de véhicule

(30) Priorität: 04.11.2010 DE 102010043416
(43) Veröffentlichungstag der Anmeldung: 09.05.2012
(73) Patentinhaber: Mayser GmbH & Co. KG, 89073 Ulm (DE)
(72) Erfinder: Freiermuth, Thomas, 89075 Ulm (DE); Scherraus, Marc, 89075 Ulm (DE); Wiest, Thomas, 88416 Ochsenhausen (DE)
(74) Vertreter: Patentanwälte Ruff, Wilhelm, Beier, Dauster & Partner mbB

(56) Entgegenhaltungen:
- DE-A1- 2 230 240
- DE-C1- 19 943 890
- DE-U1-202009 012 350
- US-B2- 7 132 953

## Beschreibung

Die Erfindung betrifft einen Fahrzeugsitz mit wenigstens einem Sitzbelegungsschalter, wobei der Fahrzeugsitz eine Unterfederung mit mehreren, unterhalb eines Sitzkissens angeordneten Federstäben aufweist. Bekannte Fahrzeugsitze mit Unterfederung sind mit Sitzbelegungsschaltern versehen, die unterhalb des Bezugsstoffes auf einer Oberseite des Sitzkissens angeordnet sind. Auf diese Weise kann bei Belastung des Sitzkissens eine sichere Schaltsignalerzeugung gewährleistet werden. Die auf der Oberseite des Sitzkissens zwangsläufig elastische Anordnung des Sitzbelegungsschalters ist aber hinsichtlich einer zuverlässigen Funktion des Sitzbelegungsschalters als auch hinsichtlich des Sitzkomforts nicht unproblematisch. Dies beispielsweise gerade dann, wenn das Sitzkissen mit einer Sitzheizung versehen ist.

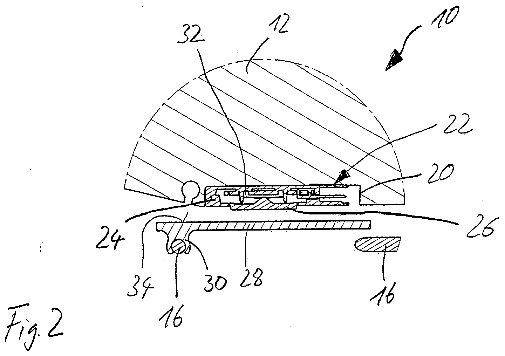

Aus der deutschen Offenlegungsschrift DE 22 30 240 A1, die als der nächstliegende Stand der Technik betrachtet wird, ist ein Sitz mit einem Sitzbelegungsschalter bekannt, bei dem, siehe dort Fig. 2, der Sitzbelegungsschalter in eine Aussparung der Polsterauflage eingebaut ist. Es ist ausdrücklich vorgesehen, den Schalter in einer Aussparung des Sitzkissens anzuordnen, sodass der Schalter einen Bezug des Sitzkissens von der Unterseite her kontaktiert.
Aus der deutschen Gebrauchsmusterschrift DE 20 2009 012 350 U1 ist eine Drucksensoreinheit bekannt, die an den Federstäben der Unterfederung eines Sitzes vorgesehen ist. Es ist vorgesehen, den Drucksensor auf einer stabilen Grundplatte zu montieren, wobei die Grundplatte wiederum mit der Unterfederung verbunden ist. Auf diese Weise soll eine gleichmäβige Druckeinleitung in den Drucksensor erfolgen.
Aus der US-Patentschrift US 7,132,953 B2 ist ein Sitz mit einer Platte mit mehreren Druckschaltern bekannt, die an der Unterseite eines Sitzkissens angeordnet wird. Es ist ausdrücklich offenbart, dass die Druckschalter sich in Ausnehmungen des Sitzkissens hineinerstrecken sollen.

Aus der deutschen Patentschrift DE 199 43 890 C1 ist ein Fahrzeugsitz bekannt, bei dem Sensoren auf einer Platte angeordnet sind, wobei die Platte wiederum mit der Unterfederung des Sitzes verbunden ist und an einer Unterseite des Sitzkissens anliegt.

Mit der Erfindung soll ein verbesserter Fahrzeugsitz mit wenigstens einem Sitzbelegungsschalter bereitgestellt werden.

Erfindungsgemäß ist hierzu ein Fahrzeugsitz mit den Merkmalen von Anspruch 1 vorgesehen. Es ist an dem Fahrzeugsitz wenigstens ein Sitzbelegungsschalter vorgesehen, wobei der Fahrzeugsitz eine Unterfederung mit mehreren, unterhalb eines Sitzkissens angeordneten Federstäben aufweist, bei dem der Sitzbelegungsschalter im Bereich der Federstäbe und einer Unterseite des Sitzkissens angeordnet ist, bei dem der wenigstens eine Sitzbelegungsschalter an der Unterseite des Sitzkissens angeordnet und bei dem eine dem Sitzbelegungsschalter gegenüberliegende Gleitfläche vorgesehen ist, wobei die Gleitfläche an den Federstäben der Unterfederung vorgesehen oder mit den Federstäben der Unterfederung verbunden ist.

Durch Anordnung des Sitzbelegungsschalters im Bereich der Federstäbe und einer Unterseite des Sitzkissens ist gewährleistet, dass der Sitzkomfort nicht durch die Anordnung des Sitzbelegungsschalters beeinträchtigt wird. Im Bereich der Unterseite des Sitzkissens und im Bereich der Federstäbe kann darüber hinaus der Sitzbelegungsschalter steifer aufgehängt werden, als dies auf einer Oberseite des Sitzkissens der Fall ist. Dies führt zu verbesserten, reproduzierbareren Verhältnissen bei der Auslösung des Sitzbelegungsschalters und infolgedessen zu einer zuverlässigeren Schaltsignalerzeugung.

Darüber hinaus ist die Anordnung des Sitzbelegungsschalters im Bereich der Federstäbe und einer Unterseite des Sitzkissens auch bezüglich eines elektrischen Anschlusses sowie auch bezüglich eines eventuellen Austauschs des Sitzbelegungsschalters vorteilhaft. Elektrische Anschlussleitungen können in einfacher Weise unter dem Sitzkissen zugeführt werden. Der Sitzbelegungsschalter kann beispielsweise ausgetauscht werden, ohne den Fahrzeugsitz zerlegen zu müssen.

Die Anordnung des Sitzbelegungsschalters an der Unterseite des Sitzkissens ermöglicht die gegenüberliegende Anordnung einer Gleitfläche. Das Vorsehen einer solchen Gleitfläche hat sich als äußerst vorteilhaft hinsichtlich einer zuverlässigen Schaltsignalerzeugung herausgestellt. Dies deshalb, da das Sitzkissen sich bei Belastung zwangsläufig verformt und es daher auch zu einem Verkippen des Sitzbelegungsschalters kommen Das Vorsehen einer Gleitfläche verhindert dann, dass sich der Sitzbelegungsschalter verkantet und möglicherweise trotz Belastung des Sitzkissens kein Schaltsignal auslöst. Das Vorsehen der Gleitfläche an den Federstäben der Unterfederung oder eine Verbindung der Gleitfläche mit den Federstäben der Unterfederung, ermöglicht eine platzsparende und einfach zu montierende Anordnung von Sitzbelegungsschalter und Gleitfläche.

In Weiterbildung der Erfindung ist die Gleitfläche an einem Verbindungselement der Federstäbe angeordnet.

Um die Federeigenschaften der Unterfederung zu verbessern, sind die Federstäbe der Unterfederung mit Verbindungselementen untereinander verbunden. Die Anordnung der Gleitfläche an einem solchen Verbindungselement der Federstäbe ist unproblematisch und ermöglicht es, auf das Vorsehen eines separaten Bauteils für die Gleitfläche zu verzichten.

In Weiterbildung der Erfindung ist der wenigstens eine Sitzbelegungsschalter im Bereich einer Unterseite des Sitzkissens an dem Sitzkissen befestigt.

Das Einschäumen des Sitzbelegungsschalters kann vorteilhaft sein, um diesen während der Herstellung des Sitzkissens an der korrekten Position anzuordnen und gleichzeitig zu befestigen. Alternativ kann der Sitzbelegungsschalter eingeklipst, eingesteckt oder eingeklebt werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine abschnittsweise Darstellung eines erfindungsgemäßen Fahrzeugsitzes gemäß einer bevorzugten Ausführungsform in auseinandergezogener Darstellung und
- Fig. 2: eine abschnittsweise Schnittansicht des Fahrzeugsitzes der Fig. 1.

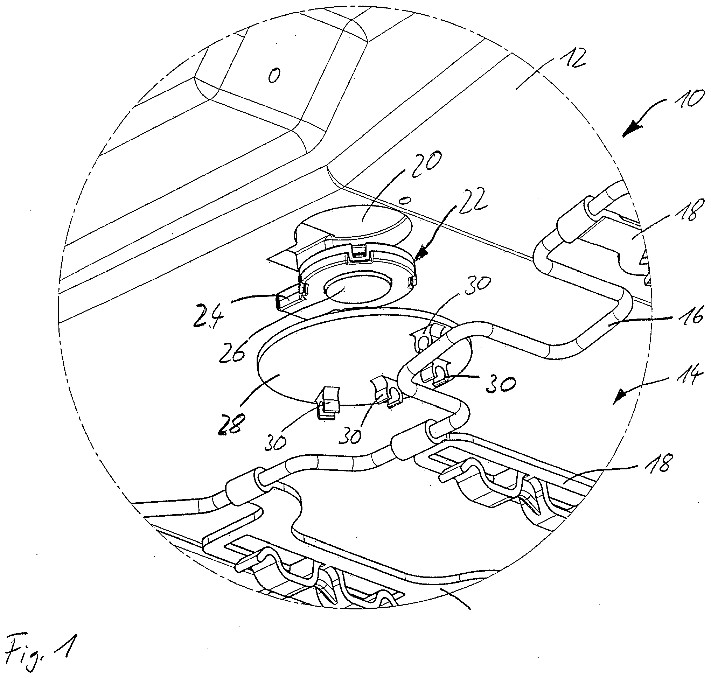

Die Darstellung der Fig. 1 zeigt abschnittsweise einen Fahrzeugsitz 10, der ein Sitzkissen 12 und eine unterhalb des Sitzkissens angeordnete Unterfederung 14 aufweist. Die Unterfederung 14 weist mehrere Federstäbe 16 auf, wobei in der Darstellung der Fig. 1 lediglich einer dieser Federstäbe zu erkennen ist. Der Federstab 16 verläuft mäanderförmig unterhalb des Sitzkissens. Ein zweiter, in Fig. 1 nicht sichtbarer Federstab würde im Wesentlichen parallel zum ersten Federstab 16 unterhalb des Sitzkissens verlaufen. Nebeneinander liegende Federstäbe sind jeweils durch Verbindungselemente 18 miteinander verbunden. Die Verbindungselemente 18 bestehen aus Kunststoff und halten benachbarte Federstäbe in einer definierten Relativlage zueinander.

Das Sitzkissen 12 ist an seiner Unterseite mit einer Ausnehmung 20 für einen Sitzbelegungsschalter 22 versehen. Der Sitzbelegungsschalter 22 weist ein Gehäuse 24 sowie ein Betätigungselement 26 auf, das relativ zum Gehäuse 24 bewegbar angeordnet ist. Wird das Betätigungselement 26 in der Darstellung der Fig. 1 nach oben, in Richtung auf das Gehäuse 24 und auf das Sitzkissen 12 zu, gedrückt, löst eine in Fig. 1 nicht dargestellte elektrische Schaltvorrichtung im Inneren des Sitzbelegungsschalters 22 ein elektrisches Schaltsignal aus. Elektrische Zuleitungen zu dem Sitzbelegungsschalter 22 sind in Fig. 1 der Übersichtlichkeit halber nicht dargestellt.

Der Sitzbelegungsschalter 22 kann während der Herstellung des Sitzkissens 12 an dessen Unterseite eingeschäumt werden. Alternativ kann das Sitzkissen 12 mit der Ausnehmung 20 hergestellt werden und der Sitzbelegungsschalter 22 wird dann in geeigneter Weise in dieser Ausnehmung 20 befestigt.

Gegenüberliegend dem Sitzbelegungsschalter 22 und speziell gegenüber dem Betätigungselement 26 ist ein Gleitflächenelement 28 in Form einer Kreisscheibe vorgesehen. Das Gleitflächenelement 28 weist auf seiner in Fig. 1 nicht erkennbaren Oberseite eine Gleitfläche auf, die eine geringe Reibung zwischen dem Betätigungselement 26 und gegebenenfalls dem Gehäuse 24 des Sitzbelegungsschalters 22 sicherstellt, wenn der Sitzbelegungsschalter 22 in Richtung auf das Gleitflächenelement 28 bewegt wird und auf der Gleitfläche zur Anlage kommt. Die Gleitfläche an dem Gleitflächenelement 28 verhindert dann, dass sich der Sitzbelegungsschalter bzw. speziell das Betätigungselement 26 verkantet und in die Unterseite des Sitzkissens 12 hineingedrückt wird, anstatt eine Relativbewegung zwischen Betätigungselement 26 und Gehäuse 24 des Sitzbelegungsschalters 22 zu verursachen und dadurch ein Schaltsignal auszulösen.

Bei einer Belastung des Sitzkissens 12 in Richtung auf die Unterfederung 14 zu wird zwar in der Regel der Sitzbelegungsschalter 22 senkrecht zum Gleitflächenelement 28 auf dieses zu bewegt. Wird aber beispielsweise das Sitzkissen 12 nur einseitig belastet, so wird der Sitzbelegungsschalter 22 relativ zur Unterfederung 14 und dem Gleitflächenelement 28 verkippt werden und gleichzeitig auf das Gleitflächenelement 28 zu bewegt werden. In einem solchen asymmetrischen Belastungsfall kann der Fall auftreten, dass zunächst das Gehäuse 24 mit einer unteren Kante auf das Gleitflächenelement 28 trifft. Ein geringer Reibungskoeffizient zwischen der Gleitfläche am Gleitflächenelement 28 und dem Gehäuse 24 sowie auch dem Betätigungselement 26 sorgt dann dafür, dass die Kante des Gehäuses 24 im Wesentlichen unbehindert über die Gleitfläche des Gleitflächenelements 28 rutschen kann, bis auch das Betätigungselement 26 auf der Gleitfläche aufliegt und dann relativ zum Gehäuse 24 bewegt wird und somit ein Schaltsignal ausgelöst wird.

Das Gleitflächenelement 28 ist an seiner, dem Sitzbelegungsschalter 22 abgewandten Rückseite mit insgesamt vier Halteklammern 30 versehen. Die Halteklammern 30 sind einstückig an das Gleitflächenelement 28 angespritzt und sind als elastisch verformbare Federklammern ausgebildet, die an den Durchmesser des Federstabes 16 angepasst sind. Um das Gleitflächenelement 28 auf dem Federstab 16 zu befestigen, werden die Halteklammern 30 auf den Federstab 16 aufgesetzt. Das Gleitflächenelement 28 wird dann auf den Federstab 16 zugedrückt, bis die Halteklammern 30 auf den Federstab 16 aufschnappen und diesen dann teilweise umschließen. Das Gleitflächenelement 28 kann somit in einfacher Weise durch Aufklippsen auf den Federstab 16 montiert werden.

Die Darstellung der Fig. 2 zeigt eine abschnittsweise Schnittansicht des Fahrzeugsitzes 10 der Fig. 1, wobei die Schnittebene durch den Sitzbelegungsschalter 22 gelegt ist. Der Sitzbelegungsschalter 22 ist in der Ausnehmung 20 des Sitzkissens 12 angeordnet und weist neben dem Gehäuse 24 das Betätigungselement 26 auf, das relativ zum Gehäuse 24 bewegbar angeordnet ist. Innerhalb des Gehäuses 24 ist eine Federscheibe 32 zu erkennen, die auf einer in Fig. 2 nicht dargestellten Leiterplatte mit Schaltkontakten aufliegt. Wird das Betätigungselement 26 in Richtung auf das Gehäuse 24 gedrückt, wird die Federscheibe 32 verformt und ein Mittenbereich der Federscheibe 32 gelangt in Anlage auf einen mittigen Schaltkontakt auf der Leiterplatte. Dadurch wird ein Schaltsignal ausgelöst. Die Federplatte 32 spannt gleichzeitig das Betätigungselement 26 in die in Fig. 2 dargestellte Stellung vor.

Gegenüber dem Sitzbelegungsschalter 22 ist das Gleitflächenelement 28 mit der Gleitfläche 34 zu erkennen, die dem Betätigungselement 26 und dem Gehäuse 24 des Sitzbelegungsschalters 22 gegenüberliegt. Das Gleitflächenelement 28 ist, wie bereits erörtert wurde, mittels der Halteklammern 30 an dem Federstab 16 der Unterfederung befestigt.

Die Darstellung der Fig. 2 zeigt den unbelasteten Zustand des Fahrzeugsitzes 10, in dem das Gleitflächenelement 28 und speziell die Gleitfläche 34 beabstandet vom Betätigungselement 26 angeordnet ist. Wird das Sitzkissen 12 des Fahrzeugsitzes 10 dann belastet, wird der Sitzbelegungsschalter 22 zusammen mit dem Sitzkissen 12 in Richtung auf das Gleitflächenelement 28 bewegt, bis das Betätigungselement 26 auf der Gleitfläche 34 aufliegt. Wird das Sitzkissen 12 dann weiter belastet, bewegt sich das Gehäuse 24 weiter in Richtung des Gleitflächenelements 28 und das Betätigungselement 26 drückt die Federscheibe 32 zusammen, bis ein Schaltsignal ausgelöst wird. Die Federkennlinie der Federscheibe 32 ist dabei so gewählt, dass ein Schaltsignal erst dann ausgelöst wird, wenn das Sitzkissen mit einem vordefinierten Gewicht belastet wird, beispielsweise mit dem Gewicht einer mitfahrenden Person oder eines schweren Gegenstandes, der dann am Fahrzeugsitz noch gesichert werden muss.

Bei starker Belastung des Fahrzeugsitzes 10 und des Sitzkissens 12 kommt das Gehäuse 24 des Sitzbelegungsschalters 22 in Anlage an die Gleitfläche 34 und der Sitzbelegungsschalter 22 wird dann zusammen mit dem Gleitflächenelement 28 und den Federstäben 16 weiter in der Fig. 2 nach unten bewegt, um eine Federbewegung zu ermöglichen. In diesem Zustand bleibt das Betätigungselement 26 in der Stellung, in der es den Mittelpunkt der Federscheibe 32 auf den zugeordneten Schaltkontakt auf der Leiterplatte drückt, so dass ein Schaltsignal ausgegeben wird, das eine Belastung des Fahrzeugsitzes 10 anzeigt.

Um ein Überdrücken der Federscheibe 32 zu vermeiden, ist der Sitzbelegungsschalter mit einem Überdrückschutz versehen, der verhindert, dass das Betätigungselement die Federscheibe 32 zu stark belastet, was zu einer Zerstörung der Federscheibe 32 oder der Schaltkontakte auf der Leiterplatte führen könnte. Hierzu ist das Betätigungselement 26 mit Anschlagflächen versehen, die dann auf einer passenden Anschlagfläche am Gehäuse 24 anliegen, wenn die Mitte der Federscheibe 32 gerade den Schaltkontakt auf der Leiterplatte kontaktiert.

## Patentansprüche

1. Fahrzeugsitz mit wenigstens einem Sitzbelegungsschalter (22), wobei der Fahrzeugsitz (10; 40) eine Unterfederung (14; 44) mit mehreren, unterhalb eines Sitzkissens (12; 42) angeordneten Federstäben (16; 46) aufweist, wobei der Sitzbelegungsschalter (22) im Bereich der Federstäbe (16; 46) und einer Unterseite des Sitzkissens (12; 42) angeordnet ist, **dadurch gekennzeichnet, dass** der wenigstens eine Sitzbelegungsschalter (22) an der Unterseite des Sitzkissens (12) angeordnet ist und eine dem Sitzbelegungsschalter (22) gegenüberliegende Gleitfläche (34) vorgesehen ist, wobei die Gleitfläche (34) an den Federstäben (16) der Unterfederung (14) vorgesehen oder mit den Federstäben (16) der Unterfederung (14) verbunden ist.

2. Fahrzeugsitz nach Anspruch 1, **dadurch gekennzeichnet, dass** die Gleitfläche an einem Verbindungselement der Federstäbe angeordnet ist.

3. Fahrzeugsitz nach Anspruch 1 oder 2, **dadurch gekennzeichnet, dass** der wenigstens eine Sitzbelegungsschalter (22) im Bereich einer Unterseite des Sitzkissens (12) an dem Sitzkissen (12) befestigt ist.

## Claims

1. Vehicle seat having at least one seat occupancy switch (22), wherein the vehicle seat (10; 40) has a spring suspension (14; 44) including a plurality of spring bars (16; 46) disposed below a seat cushion (12; 42), wherein the seat occupancy switch (22) is arranged in the vicinity of the spring bars (16; 46) and a bottom side of the seat cushion (12; 42), **characterized in that** the at least one seat occupancy switch (22) is arranged on the bottom side of the seat cushion (12) and a sliding surface (34) is provided opposite to the seat occupancy switch (22), wherein the sliding surface (34) is provided on the spring bars (16) of the spring suspension (14) or is connected to the spring bars (16) of the spring suspension (14).

2. Vehicle seat according to claim 1, **characterized in that** the sliding surface is arranged on a connecting element of the spring bars.

3. Vehicle seat according to claim 1 or 2, **characterized in that** the at least one seat occupancy switch (22) is fixed to the seat cushion (12) in the vicinity of a bottom side of the seat cushion (12).

## Revendications

1. Siège de véhicule comprenant au moins un commutateur d'occupation de siège (22), le siège de véhicule (10 ; 40) présentant une suspension à ressort (14 ; 44) avec plusieurs barres à ressort (16 ; 46) disposées sous un coussin de siège (12 ; 42), le commutateur d'occupation de siège (22) étant disposé dans la région des barres à ressort (16 ; 46) et d'un côté inférieur du coussin de siège (12 ; 42), **caractérisé en ce que** l'au moins un commutateur d'occupation de siège (22) est disposé au niveau du côté inférieur du coussin de siège (12) et une surface de glissement (34) opposée au commutateur d'occupation de siège (22) est prévue, la surface de glissement (34) étant prévue au niveau des barres à ressort (16) de la suspension à ressort (14) ou étant connectée aux barres à ressort (16) de la suspension à ressort (14).

2. Siège de véhicule selon la revendication 1, **caractérisé en ce que** la surface de glissement est disposée au niveau d'un élément de connexion des barres à ressort.

3. Siège de véhicule selon la revendication 1 ou 2, **caractérisé en ce que** l'au moins un commutateur d'occupation de siège (22) est fixé dans la région d'un côté inférieur du coussin de siège (12) au niveau du coussin de siège (12).
